# EUROPÄISCHE PATENTSCHRIFT

(11) **EP 3 285 951 B1**
(45) Veröffentlichungstag und Bekanntmachung des Hinweises auf die Patenterteilung: **12.02.2020**
(21) Anmeldenummer: 16710454.6
(22) Anmeldetag: 18.03.2016
(51) Int. Cl.: H01S 3/23, B23K 26/06, B23K 1/005, B23K 1/20, B23K 26/354, B23K 26/361, B23K 101/34, B23K 103/08, B23K 26/24

(54) **FÜGEVORRICHTUNG UND FÜGEVERFAHREN**
JOINING DEVICE AND JOINING METHOD
DISPOSITIF D'ASSEMBLAGE ET PROCÉDÉ D'ASSEMBLAGE

(30) Priorität: 22.04.2015 DE 102015207279
(43) Veröffentlichungstag der Anmeldung: 28.02.2018
(73) Patentinhaber: Volkswagen Aktiengesellschaft, 38440 Wolfsburg (DE); IPG Laser GmbH, 57299 Burbach (DE)
(72) Erfinder: HAMMER, Thorge, 38479 Tappenbeck (DE); REIMANN, Wilfried, 33813 Oerlinghausen (DE); SHCHERBAKOV, Eugene, 57299 Burbach (DE)
(74) Vertreter: Kobiako von Gamm, Iouri
(86) Internationale Anmeldenummer: PCT/EP2016/055944
(87) Internationale Veröffentlichungsnummer: WO 2016/169705

(56) Entgegenhaltungen:
- DE-A1- 19 933 825
- DE-A1-102006 038 422
- DE-A1-102008 013 396
- DE-A1-102013 011 676

## Beschreibung

Die Erfindung betrifft eine Fügevorrichtung gemäß dem Oberbegriff des Anspruchs 1 sowie ein Fügeverfahren gemäß dem Oberbegriff des Anspruchs 8 (siehe, zum Beispiel DE 10 2008 013396 A1).

Eine Fügevorrichtung und ein Fügeverfahren der eingangsgenannten Art sind beispielsweise aus DE 10 2006 038 422 A1 bekannt. Gemäß diesem Dokument wird die Laserstrahlung einer ersten Laserstrahlungsquelle dazu genutzt, um einen Stoffschluss zweier Bauteile in einer von diesen gebildeten Fügezone zu bewirken. Die Laserstrahlung einer zweiten Laserstrahlungsquelle wird dazu genutzt, um in einer Fügerichtung der Laserstrahlung der ersten Laserstrahlungsquelle vorlaufend bzw. vorgeordnet in der Fügezone eine Vorwärmung der beiden Bauteile als eine Fügevorbehandlung zu bewirken. Die von separaten Laserstrahlungsquellen emittierten ersten und zweiten Laserstrahlungen werden dabei mittels jeweiliger Fokussiereinrichtungen und Optiken in die Fügezone fokussiert, was einen erhöhten Installationsaufwand bedingt.

Der Erfindung liegt die Aufgabe zugrunde, eine wie im Oberbegriff des Anspruchs 1 definierte Fügevorrichtung und ein wie im Oberbegriff des Anspruchs 8 definiertes Fügeverfahren so fortzubilden, dass der Installationsaufwand reduziert wird.

Dies wird für die Fügevorrichtung mit den Merkmalen in kennzeichnenden Teil des Anspruchs 1 und für das Fügeverfahren mit den Merkmalen in kennzeichnenden Teil des Anspruchs 8 erreicht. Weiterbildungen der Erfindung sind in den jeweiligen abhängigen Ansprüchen definiert. Gemäß der Erfindung wird eine Fügevorrichtung bereitgestellt zum laserstrahlbasierten Zusammenfügen mindestens zweier Bauteile. Die Fügevorrichtung weist eine erste Laserstrahlungsquelle mit einer vorbestimmten Leistungskonfiguration, einen ersten Strahlungsleiter, eine zweite Laserstrahlungsquelle mit einer vorbestimmten Leistungskonfiguration, mindestens einen zweiten Strahlungsleiter und Fokussiermittel auf.

Der erste Strahlungsleiter ist mit der ersten Laserstrahlungsquelle verbunden, um von der ersten Laserstrahlungsquelle emittierte erste Laserstrahlung in den ersten Strahlungsleiter einzukoppeln. Der mindestens eine zweite Strahlungsleiter ist mit der zweiten Laserstrahlungsquelle verbunden, um von der zweiten Laserstrahlungsquelle emittierte zweite Laserstrahlung in den mindestens einen zweiten Strahlungsleiter einzukoppeln. Die Fokussiermittel sind an die ersten und zweiten Strahlungsleiter (bevorzugt an jeweilige Strahlungsaustrittsenden dieser) gekoppelt und eingerichtet, die erste Laserstrahlung und die zweite Laserstrahlung voneinander beabstandet in eine Fügezone der beiden Bauteile zu fokussieren.

Die erfindungsgemäße Fügevorrichtung zeichnet sich dadurch aus, dass die Fokussiermittel eingerichtet sind, die erste und die zweite Laserstrahlung über einen gemeinsamen Strahlengang zu fokussieren, und dass eine Kopplungseinrichtung vorgesehen ist, welche eingangsseitig mit den ersten und zweiten Strahlungsleitern (bevorzugt mit den jeweiligen Strahlungsaustrittsenden dieser) und austrittsseitig mit den Fokussiermitteln verbunden ist und welche eingerichtet ist, die erste und die zweite Laserstrahlung in den gemeinsamen Strahlengang der Fokussiermittel einzukoppeln.

Dadurch, dass gemäß der Erfindung die erste und die zweite Laserstrahlung über einen gemeinsamen Strahlengang fokussiert werden können, braucht nicht für jede der beiden Laserstrahlungen ein separater Strahlengang zur Fokussierung vorgesehen werden und ist somit der Installationsaufwand für die Fügevorrichtung reduziert.

Bevorzugt umfassen die Fokussiermittel eine einzige Optik, welche zur Fokussierung der ersten und zweiten Laserstrahlungen dient. Die Optik definiert einen einzigen Strahlengang, über welchen die ersten und zweiten Laserstrahlungen gemeinsam geleitet und dabei mit mehreren voneinander beabstandeten Fokussen in die Fügezone der beiden Bauteile fokussiert werden können.

Gemäß einer Ausführungsform der Erfindung ist mindestens ein weiterer zweiter Strahlungsleiter vorgesehen, welcher mit der zweiten Laserstrahlungsquelle verbunden ist, um die zweite Laserstrahlung in den mindestens einen weiteren zweiten Strahlungsleiter einzukoppeln. Auf diese Weise kann die zweite Laserstrahlung vorteilhaft auf zwei Arbeitspunkte in der Fügezone verteilt werden.

Gemäß einer weiteren Ausführungsform der Erfindung weist die Kopplungseinrichtung eine Mehrkernfaser mit einer der Summe von ersten und zweiten Strahlungsleitern entsprechen-den Anzahl von insbesondere zueinander parallel verlaufenden Faserkernen zur Strahlungsleitung auf. Die Faserkerne sind einerseits jeweils mit einem der Strahlungsaustrittsenden der ersten und zweiten Strahlungsleiter gekoppelt und sind andererseits jeweils mit den Fokussiermitteln gekoppelt. Mit anderen Worten sind in der Mehrkernfaser die ersten und zweiten Strahlungsleiter (Lichtleiter) in ein gemeinsames Lichtleiterkabel (die Mehrkernfaser) gekoppelt, welches seinerseits mit den Fokussiermitteln gekoppelt ist. Alternativ zu dem Lichtleiterkabel bzw. der Mehrkernfaser kann auch ein entsprechender Faserkoppler vorgesehen sein, welcher es wie die Mehrkernfaser ermöglicht, mehrere Fokusse über einen einzigen Strahlengang bzw. mit einer einzigen Optik abzubilden.

Gemäß noch einer Ausführungsform der Erfindung unterscheidet sich die Leistungskonfiguration der ersten Laserstrahlungsquelle von der Leistungskonfiguration der zweiten Laserstrahlungsquelle. Bevorzugt ist eine Laserstrahlleistung der ersten Laserstrahlungsquelle größer als eine Laserstrahlleistung der zweiten Laserstrahlungsquelle. Durch diese unterschiedliche Leistungskonfiguration der beiden Laserstrahlungsquellen können diese bei einem Fügeprozess mit der Fügevorrichtung vorteilhaft für unterschiedliche Aufgaben eingesetzt werden.

So ist bevorzugt die Leistungskonfiguration der ersten Laserstrahlungsquelle definiert, um mit der fokussierten ersten Laserstrahlung durch Wärmeeinbringung einen Stoffschluss der beiden Bauteile zu bewirken. Andererseits ist bevorzugt die Leistungskonfiguration der zweiten Laserstrahlungsquelle definiert, um mit der fokussierten zweiten Laserstrahlung eine Oberflächenvorbehandlung an mindestens einem der beiden Bauteile in der Fügezone als eine Fügevorbehandlung zu bewirken. Insbesondere ist die Leistungskonfiguration der zweiten Laserstrahlungsquelle definiert, um mit der fokussierten zweiten Laserstrahlung ein Abtragen und/oder Anschmelzen einer Beschichtung auf mindestens einem der beiden Bauteile in der Fügezone als eine Fügevorbehandlung zu bewirken. Bevorzugt ist die Leistungskonfiguration der zweiten Laserstrahlungsquelle definiert, um mit der fokussierten zweiten Laserstrahlung die Fügevorbehandlung an beiden Bauteilen gleichzeitig zu bewirken.

Auf diese Weise kann vorteilhaft das Laserfügen beschichteter Bauteile wie Bleche, insbesondere feuerverzinkter Bauteile, prozesssicherer gestaltet werden. Bei üblichen laserbasierten Fügevorrichtungen konnten beim Zusammenfügen beschichteter Bauteile bisher charakteristische Fehlstellen wie Spritzer, Poren, Anbindungsfehler oder eine raue Nahtoberfläche beobachtet werden. Insbesondere beim Laserlöten feuerverzinkter Bauteile konnten eine Einschnürung des Prozessfensters und z.B. eine wellige Randanbindung der Lötnaht der Fügezone festgestellt werden. Die bisher fehlende Möglichkeit, Laserstrahlfügeverbindungen in einer Anmutungsqualität herzustellen, welche z.B. für Außenhautteile von Kraftfahrzeugen geeignet ist, stand dem Einsatz feuerverzinkter Bauteile (wie Bleche) z.B. im Außenhautbereich von Kraftfahrzeugen entgegen.

Die erfindungsgemäße Fügevorrichtung, bei welcher neben dem auf der ersten Laserstrahlung basierenden eigentlichen Fügevorgang mit Stoffschluss der Bauteile eine Bestrahlung der Bauteiloberfläche mit der zweiten Laserstrahlung zur Änderung der Oberflächeneigenschaften der Bauteile durchgeführt werden kann, kann vorteilhaft die beim Laserfügen von beschichteten Bauteilen vorhandenen Probleme lösen.

Durch die erfindungsgemäße Fügevorrichtung wird mit der zweiten Laserstrahlung ein Anschmelzen und/oder selektives Abtragen der Beschichtung (insbesondere einer Zinkschichtoberfläche) der Bauteile im Bereich der Fügezone ermöglicht. Vorteilhaft wird die zweite Laserstrahlung so in die Fügezone fokussiert, dass diese Fügevorbehandlung inline und dem eigentlichen Fügeprozess mit der ersten Laserstrahlung direkt vorlaufend erfolgt, wodurch die Anmutungsqualität der entstehenden Fügenaht erhöht werden kann.

Durch die vorlaufend der ersten Laserstrahlung in die Bauteile eingebrachte Wärme werden insbesondere beim Laserlöten außerdem ein höheres Füllvolumen an Lot und eine größere Anbindungslänge des Lotes an den Bauteilen erreicht. Schließlich wird allgemein die Sensitivität eines laserbasierten Fügeprozesses gegenüber Störgrößen wie z.B. Schwankungen der Laserleistung oder einer Bauteil-Beölung reduziert, so dass ein prozesssicheres laserbasiertes Zusammenfügen feuerverzinkter oder anders beschichteter Bauteile möglich ist.

Gemäß der Erfindung wird auch ein Fügeverfahren zum mittels Laserstrahlung Zusammenfügen mindestens zweier Bauteile bereitgestellt. Das Fügeverfahren wird bevorzugt unter Verwendung einer Fügevorrichtung gemäß einer, mehreren oder allen zuvor beschriebenen Ausführungsformen der Erfindung in jeder denkbaren Kombination realisiert bzw. ausgeführt. Um Wiederholungen zu vermeiden, wird hier festgestellt, dass für das erfindungsgemäße Fügeverfahren die gleichen wie oben für die erfindungsgemäße Fügevorrichtung aufgezeigten Vorteile und Variationen gelten.

Das Fügeverfahren umfasst die Verfahrensschritte: Anordnen der beiden Bauteile, so dass sie eine Fügezone zum Zusammenfügen dieser definieren; Fokussieren einer von einer ersten Laserstrahlungsquelle emittierten ersten Laserstrahlung in einem Laserspot in die Fügezone der Bauteile, so dass im Bereich des Laserspots der ersten Laserstrahlung durch Wärmeeinbringung ein Stoffschluss der beiden Bauteile erzielt wird; und in einer Fügerichtung dem Laserspot der ersten Laserstrahlung vorlaufend Fokussieren einer von einer zweiten Laserstrahlungsquelle emittierten zweiten Laserstrahlung in mindestens einem Laserspot in die Fügezone der Bauteile, so dass im Bereich des mindestens einen Laserspots der zweiten Laserstrahlung eine Fügevorbehandlung an mindestens einem der beiden Bauteile in der Fügezone durchgeführt wird. Das erfindungsgemäße Fügeverfahren zeichnet sich dadurch aus, dass die erste Laserstrahlung und die zweite Laserstrahlung über einen gemeinsamen Strahlengang in die Fügezone fokussiert werden.

Gemäß einer Ausführungsform der Erfindung wird durch den mindestens einen Laserspot der zweiten Laserstrahlung als Fügevorbehandlung eine Oberflächenvorbehandlung an dem mindestens einen der beiden Bauteile in der Fügezone durchgeführt. Bevorzugt wird durch den mindestens einen Laserspot der zweiten Laserstrahlung als Oberflächenvorbehandlung ein Abtragen und/oder Anschmelzen einer Beschichtung auf mindestens einem der beiden Bauteile in der Fügezone durchgeführt.

Gemäß einer weiteren Ausführungsform der Erfindung umfasst das Fügeverfahren einen Löt- oder Schweißprozess, der das Laserfügen feuerverzinkter (und anders beschichteter Werkstoffe) ermöglicht, indem durch die Nutzung einer Mehrkernfaser, insbesondere einer Dreikernfaser, eine selektive Bestrahlung der Fügezone direkt vorlaufend zum Fügeprozess realisiert wird. Die zwei, drei oder mehr Faserkerne enthaltende Mehrkernfaser ermöglicht die Kopplung mehrerer Lichtleiter in einem Lichtleitkabel. Dies ermöglicht es, die aus mehreren Laserstrahlungsquellen stammenden Laserstrahlen mit Hilfe einer einzigen Optik abzubilden und so die Fügevorbehandlung, insbesondere den Abtrag und/oder das Anschmelzen der Zinkschicht, in den Löt- oder Schweißprozess zu integrieren. Da nur eine einzige Optik für beide Laserstrahlungen erforderlich ist, können herkömmliche Optiken und Anlagen nach erfindungsgemäßer Modifikation weiterhin genutzt werden. Da die Oberflächenvorbehandlung inline erfolgt, ist keine zusätzliche Arbeitsstation erforderlich.

Insbesondere dient eine Mehrkernfaser mit z.B. drei Faserkernen zur Führung von mehreren (z.B. drei) Laserstrahlen, welche mit Hilfe der Mehrkernfaser in eine handelsübliche Optik eingebracht werden. Dies ermöglicht es die Prozessanpassung z.B. für feuerverzinkte Bleche vorzunehmen und dabei eine vorhandene Lötoptik weiterhin zu nutzen. Auf den zusammenzufügenden Bauteilen werden dabei mehrere Laserspots, wie insbesondere drei Laserspots, aus verschiedenen Laserstrahlungsquellen abgebildet.

Somit kann beispielsweise ein Trifokallöten unter Kombination einer inline vorgelagerten Oberflächenvorbehandlung und eines dieser nachgelagerten Lötens realisiert werden. Vorteilhaft kann die zur Oberflächenvorbehandlung, insbesondere zum Abtragen und/oder Anschmelzen einer Beschichtung der Bauteile, verwendete zweite Laserstrahlung beidseitig an einem Lötdraht vorbei auf die Oberflächen der Bauteile in der Fügezone geführt werden. Die zum Stoffschluss bzw. Löten verwendete erste Laserstrahlung wird dabei der zweiten Laserstrahlung nachgelagert auf die Fügezone geführt.

Für den Stoffschluss bzw. das Löten wird bevorzugt eine kontinuierlich emittierende erste Laserstrahlungsquelle eingesetzt. Für die Oberflächenvorbehandlung bzw. die Änderung der Eigenschaften der Oberflächen der Bauteile kann sowohl eine gepulste als auch eine kontinuierlich emittierende zweite Laserstrahlungsquelle eingesetzt werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand bevorzugter Ausführungsformen und unter Bezugnahme auf die beigefügten Figuren beschrieben werden.
- Fig. 1: zeigt eine schematische Seitenansicht einer Fügevorrichtung gemäß einer Ausführungsform der Erfindung.
- Fig. 2: zeigt eine schematische Draufsicht auf eine Fokussiereinrichtung der Fügevorrichtung von Fig. 1.
- Fig. 3: zeigt eine perspektivische Darstellung einer mit der Fügevorrichtung von Fig. 1 bestrahlten Fügezone zweier Bauteile.

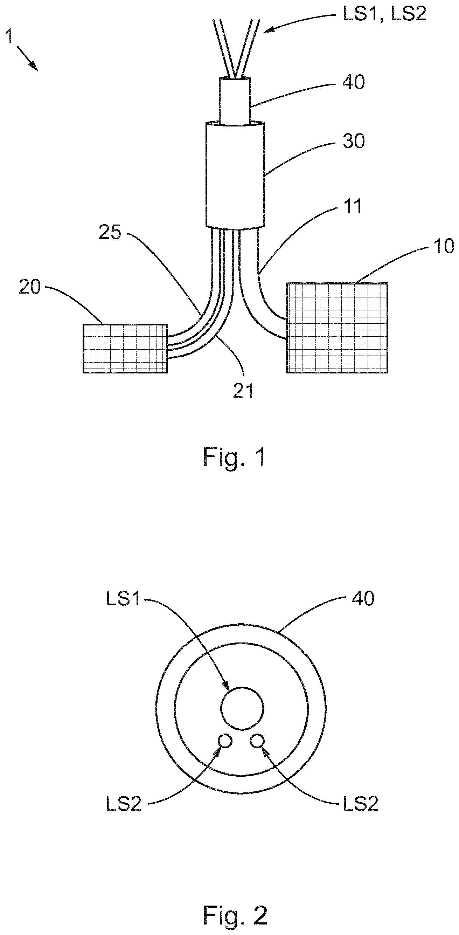

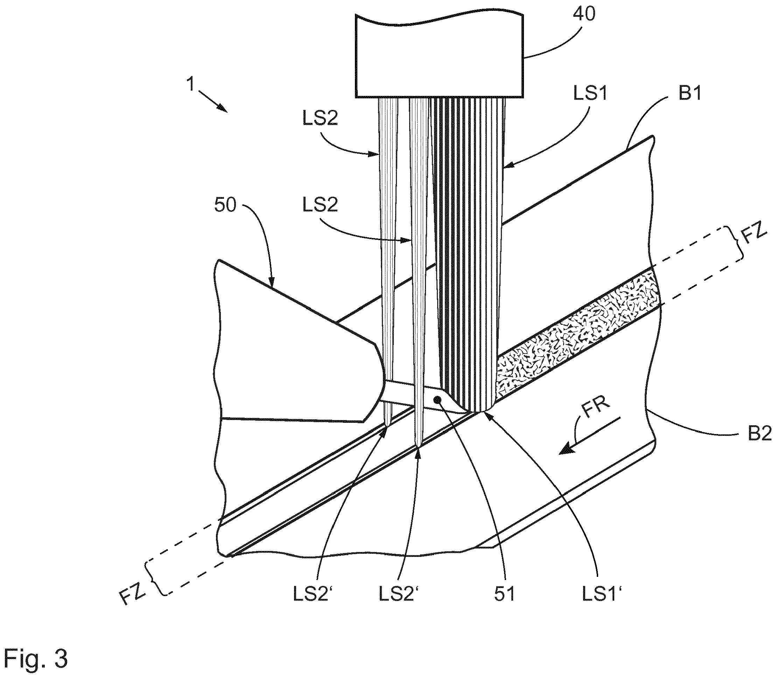

Im Folgenden werden unter Bezugnahme auf die Figuren 1 bis 3 eine Fügevorrichtung 1 zum laserstrahlbasierten Zusammenfügen mindestens zweier Bauteile B1, B2 (siehe Fig. 3) und ein die Fügevorrichtung 1 nutzendes Fügeverfahren gemäß Ausführungsformen der Erfindung beschrieben werden. Gemäß der hier beschriebenen Ausführungsform der Fügevorrichtung 1 ist diese zum laserstrahlbasierten Zusammenlöten der beiden Bauteile B1, B2 eingerichtet.

Wie in Fig. 3 gezeigt, sind die beiden Bauteile B1, B2 jeweils so zueinander angeordnet, dass sie eine streifenförmige Fügezone FZ zum Zusammenfügen der Bauteile B1, B2 bilden. Die Fügezone FZ kann dabei z.B. von zwei stumpf aneinanderstoßenden Begrenzungsrändern der beiden Bauteile B1, B2 gebildet sein. Außerdem können die Begrenzungsränder der beiden Bauteile B1, B2 in der Fügezone FZ z.B. eine Kehle zur Ausbildung einer Kehlnaht definieren.

In der vorliegenden Ausführungsform bildet jedes der beiden Bauteile B1, B2 ein Außenhautteil für eine Fahrzeugkarosserie, wobei die beiden Bauteile B1, B2 zum Korrosionsschutz rundum feuerverzinkt sind, d.h. per Feuerverzinken auf jedes Bauteil B1, B2 eine Zinkbeschichtung aufgebracht ist.

Wie in den Figuren 1 bis 3 gezeigt, weist die Fügevorrichtung 1 eine erste Laserstrahlungsquelle 10, einen ersten Strahlungsleiter 11, eine zweite Laserstrahlungsquelle 20, ein Paar von zweiten Strahlungsleitern 21, 25, eine Kopplungseinrichtung 30, eine Fokussiereinrichtung 40 als Fokussiermittel und eine Zusatzwerkstoffzuführeinrichtung 50 zum in die Fügezone FZ Zuführen eines Lötdrahtes 51 und eines Schutzgases (nicht gezeigt) auf.

Der erste Strahlungsleiter 11 ist mit der ersten Laserstrahlungsquelle 10 verbunden, um von der ersten Laserstrahlungsquelle 10 emittierte erste Laserstrahlung LS1 in den ersten Strahlungsleiter 11 einzukoppeln. Die beiden zweiten Strahlungsleiter 21, 25 sind jeweils mit der zweiten Laserstrahlungsquelle 20 verbunden, um von der zweiten Laserstrahlungsquelle 20 emittierte zweite Laserstrahlung LS2 in jeden der beiden zweiten Strahlungsleiter 21, 25 einzukoppeln. Die ersten und zweiten Strahlungsleiter 11, 21, 25 sind z.B. als voneinander separate Lichtleiterfasern ausgebildet.

Die Kopplungseinrichtung 30 ist eingangsseitig mit jeweiligen Strahlungsaustrittsenden (nicht separat bezeichnet) der ersten und zweiten Strahlungsleiter 11, 21, 25 verbunden und ist austrittsseitig mit der Fokussiereinrichtung 40 verbunden, um die ersten und zweiten Laserstrahlungen LS1, LS2 in die Fokussiereinrichtung 40 einzuleiten.

Die Fokussiereinrichtung 40, welche über die Kopplungseinrichtung 30 an die jeweiligen Strahlungsaustrittsenden der ersten und zweiten Strahlungsleiter 11, 21, 25 gekoppelt ist, umfasst eine Optik (nicht separat bezeichnet), welche zur Fokussierung der ersten und zweiten Laserstrahlungen LS1, LS2 dient. Die Optik der Fokussiereinrichtung 40 definiert einen einzigen Strahlengang, über welchen die ersten und zweiten Laserstrahlungen LS1, LS2 gemeinsam geleitet und dabei mit mehreren voneinander beabstandeten Fokussen in die Fügezone FZ der beiden Bauteile B1, B2 fokussiert werden können.

Die Kopplungseinrichtung 30 weist eine Mehrkernfaser (nicht separat bezeichnet) mit einer der Summe von ersten und zweiten Strahlungsleitern 11, 21, 25 entsprechenden Anzahl (hier drei) von zueinander parallel verlaufenden Faserkernen (nicht separat bezeichnet) zur Strahlungsleitung auf. Mit anderen Worten sind in der Mehrkernfaser die ersten und zweiten Strahlungsleiter 11, 21, 25 (Lichtleiter) in ein gemeinsames Lichtleiterkabel (die Mehrkernfaser) gekoppelt. Die Faserkerne der Mehrkernfaser sind einerseits jeweils mit einem der Strahlungsaustrittsenden der ersten und zweiten Strahlungsleiter 11, 21, 25 gekoppelt und sind andererseits jeweils mit der Fokussiereinrichtung 40 gekoppelt. Im Ergebnis ist die Kopplungseinrichtung 30 eingerichtet, die ersten und zweiten Laserstrahlungen LS1, LS2 in den gemeinsamen Strahlengang der Optik der Fokussiereinrichtung 40 einzukoppeln.

Eine vorbestimmte Leistungskonfiguration der ersten Laserstrahlungsquelle 10 und eine vorbestimmte Leistungskonfiguration der zweiten Laserstrahlungsquelle 20 sind so definiert, dass sie sich voneinander unterscheiden. In der hier beschriebenen Ausführungsform der Fügevorrichtung 1 ist eine Laserstrahlleistung der ersten Laserstrahlungsquelle 10 größer als eine Laserstrahlleistung der zweiten Laserstrahlungsquelle 20.

Genauer ist die Leistungskonfiguration der ersten Laserstrahlungsquelle 10 definiert, um mit der fokussierten ersten Laserstrahlung LS1 durch Wärmeeinbringung einen Stoffschluss der beiden Bauteile B1, B2 zu bewirken. Mit anderen Worten fungiert die erste Laserstrahlungsquelle 10 als Fügestrahlungsquelle, mit welcher beim Zusammenfügen der beiden Bauteile B1, B2 der von der Zusatzwerkstoffzuführeinrichtung 50 zugeführte Lötdraht 51 aufgeschmolzen wird und die in der Fügezone FZ befindlichen Begrenzungsränder der beiden Bauteile B1, B2 zumindest in der Schmelzzone des Lötdrahtes 51 bis auf Löttemperatur erwärmt werden.

Die Leistungskonfiguration der zweiten Laserstrahlungsquelle 20 ist dahingegen definiert, um mit der fokussierten zweiten Laserstrahlung LS2 eine Oberflächenvorbehandlung an den beiden Bauteilen B1, B2 in der Fügezone FZ als eine Fügevorbehandlung zu bewirken. In der hier beschriebenen Ausführungsform der Fügevorrichtung 1 ist die Leistungskonfiguration der zweiten Laserstrahlungsquelle 20 definiert, um mit der fokussierten zweiten Laserstrahlung LS2 ein Abtragen und/oder Anschmelzen der per Feuerverzinken jeweils auf die Bauteile B1, B2 aufgebrachten Zinkbeschichtung in der Fügezone FZ als Oberflächenvorbehandlung zu bewirken.

Im Folgenden wird unter Bezugnahme auf die obige Beschreibung der Struktur der erfindungsgemäßen Fügevorrichtung 1 ein die Fügevorrichtung 1 nutzendes Fügeverfahren zum mittels Laserstrahlung Zusammenfügen der beiden Bauteile B1, B2 beschrieben werden.

Gemäß dem Fügeverfahren werden zunächst die beiden Bauteile an einem Aufstellungsort der Fügevorrichtung 1 so zueinander angeordnet, dass sie die streifenförmige Fügezone FZ zum Zusammenfügen der Bauteile B1, B2 definieren, wie in Fig. 3 gezeigt. Dann wird die Zusatzwerkstoffzuführeinrichtung 50 zu Zuführen des Lötdrahtes 51 und des Schutzgases schräg an die Fügezone FZ angestellt.

Außerdem werden die ersten und zweiten Laserstrahlungsquellen 10, 20 auf die Fügezone FZ ausgerichtet und in Betrieb gesetzt. Dabei werden die erste Laserstrahlung LS1 und die zweite Laserstrahlung LS2 über den gemeinsamen Strahlengang der Optik der Fokussiereinrichtung 40 in die Fügezone FZ fokussiert.

Genauer wird die von der ersten Laserstrahlungsquelle 10 emittierte erste Laserstrahlung LS1 in einem Laserspot LS1' (welcher einen Durchmesser von z.B. etwa 3,2 mm hat) in der Breite etwa mittig in die streifenförmige Fügezone FZ der Bauteile B1, B2 fokussiert, so dass im Bereich des Laserspots LS1' der ersten Laserstrahlung LS1 durch Wärmeeinbringung ein Stoffschluss der beiden Bauteile B1, B2 erzielt wird. Dabei wird im Bereich des Laserspots LS1' der ersten Laserstrahlung LS1 der von der Zusatzwerkstoffzuführeinrichtung 50 zugeführte Lötdraht 51 aufgeschmolzen und werden die Begrenzungsränder der beiden Bauteile B1, B2 bis auf Löttemperatur erwärmt.

In einer Fügerichtung FR dem Laserspot LS1' der ersten Laserstrahlung LS1 mit einem vorbestimmten Abstand vorlaufend bzw. vorgeordnet wird die von der zweiten Laserstrahlungsquelle 20 emittierte zweite Laserstrahlung LS2 in zwei voneinander beabstandeten Laserspots LS2' in die Fügezone FZ der Bauteile B1, B2 fokussiert, so dass im Bereich der beiden Laserspots LS2' der zweiten Laserstrahlung LS2 als Fügevorbehandlung die Oberflächenvorbehandlung an den beiden Bauteilen B1, B2 in der Fügezone FZ durchgeführt wird. Im Rahmen der Oberflächenvorbehandlung wird durch die beiden Laserspots LS2' der zweiten Laserstrahlung LS2, welche einen gegenüber dem Durchmesser des nachgelagerten Laserspots LS1' verkleinerten Durchmesser haben, die Zinkbeschichtung auf den beiden Bauteilen B1, B2 in der Fügezone FZ abgetragen.

Somit wird sozusagen ein Trifokallöten unter Kombination einer inline vorgelagerten Oberflächenvorbehandlung und eines dieser nachgelagerten Lötens realisiert. Wie in Fig. 3 gezeigt, wird die zur Oberflächenvorbehandlung, insbesondere zum Abtragen und/oder Anschmelzen der Zinkbeschichtung, verwendete zweite Laserstrahlung LS2 beidseitig am Lötdraht 51 vorbei auf die Oberflächen der Bauteile B1, B2 in der Fügezone FZ geführt. Die zum Stoffschluss bzw. Löten verwendete erste Laserstrahlung LS1 wird der zweiten Laserstrahlung LS2 nachgelagert auf die Fügezone FZ geführt.

Für den Stoffschluss bzw. das Löten wird bevorzugt eine kontinuierlich emittierende erste Laserstrahlungsquelle 10 eingesetzt. Für die Oberflächenvorbehandlung bzw. die Änderung der Eigenschaften der Oberflächen der Bauteile B1, B2 kann sowohl eine gepulste als auch eine kontinuierlich emittierende zweite Laserstrahlungsquelle 20 eingesetzt werden.

Durch die Erfindung wird das Laserfügen, insbesondere Laserlöten, beschichteter bzw. feuerverzinkter Bauteile (insbesondere Bleche) prozesssicherer gestaltet. Bei üblichen Lösungen konnten z.B. beim Laserlöten feuerverzinkter Bauteile eine Einschnürung des Prozessfensters und die Entstehung charakteristischer Fehlstellen, wie z.B. eine wellige Randanbindung der Lötnaht der Fügezone FZ, festgestellt werden. Die erfindungsgemäße Lösung, bei welcher der Benetzung der Bauteile B1, B2 mit dem Lot des Lötdrahtes 51 eine Bestrahlung der Bauteiloberfläche vorgelagert ist, wird die Änderung der Oberflächeneigenschaften der Bauteile B1, B2 ermöglicht.

Insbesondere wird durch die Erfindung ein Anschmelzen und/oder selektives Abtragen der Beschichtung (insbesondere Zinkschichtoberfläche) im Bereich der Fügezone FZ ermöglicht. Durch die inline erfolgende, einem Fügeprozess direkt vorlaufende Fügevorbehandlung wird die Anmutungsqualität der entstehenden Fügenaht erhöht. Durch die vorlaufend in die Bauteile B1, B2 eingebrachte Wärme werden beim Löten außerdem ein höheres Füllvolumen an Lot und eine größere Anbindungslänge des Lotes an den Bauteilen B1, B2 erreicht. Schließlich wird die Sensitivität eines laserbasierten Fügeprozesses gegenüber Störgrößen wie z.B. Schwankungen der Laserleistung oder einer Bauteil-Beölung reduziert, so dass ein prozesssicheres laserbasiertes Zusammenfügen feuerverzinkter oder anders beschichteter Bauteile möglich ist.

### Bezugszeichenliste

- 1: Fügevorrichtung
- 10: erste Laserstrahlungsquelle
- 11: erster Strahlungsleiter
- 20: zweite Laserstrahlungsquelle
- 21: zweiter Strahlungsleiter
- 25: zweiter Strahlungsleiter
- 30: Kopplungseinrichtung
- 40: Fokussiereinrichtung
- 50: Zusatzwerkstoffzuführeinrichtung
- 51: Lötdraht
- B1: Bauteil
- B2: Bauteil
- FR: Fügerichtung
- FZ: Fügezone
- LS1: erste Laserstrahlung
- LS1': Laserspot
- LS2: zweite Laserstrahlung
- LS2': Laserspot

## Patentansprüche

1. Fügevorrichtung (1) zum laserstrahlbasierten Zusammenfügen mindestens zweier Bauteile (B1, B2), aufweisend:
eine erste Laserstrahlungsquelle (10) mit einer vorbestimmten Leistungskonfiguration,
einen ersten Strahlungsleiter (11), welcher mit der ersten Laserstrahlungsquelle (10) verbunden ist, um von der ersten Laserstrahlungsquelle (10) emittierte erste Laserstrahlung (LS1) in den ersten Strahlungsleiter (11) einzukoppeln,
eine zweite Laserstrahlungsquelle (20) mit einer vorbestimmten Leistungskonfiguration, mindestens einen zweiten Strahlungsleiter (21, 25), welcher mit der zweiten Laserstrahlungsquelle (20) verbunden ist, um von der zweiten Laserstrahlungsquelle (20) emittierte zweite Laserstrahlung (LS2) in den mindestens einen zweiten Strahlungsleiter (21, 25) einzukoppeln, und
Fokussiermittel (40), welche an die ersten und zweiten Strahlungsleiter (11, 21, 25) gekoppelt sind und welche eingerichtet sind, die erste Laserstrahlung (LS1) und die zweite Laserstrahlung (LS2) voneinander beabstandet in eine Fügezone (FZ) der beiden Bauteile (B1, B2) zu fokussieren,
**dadurch gekennzeichnet, dass** die Fokussiermittel (40) eingerichtet sind, die erste und die zweite Laserstrahlung (LS1, LS2) über einen gemeinsamen Strahlengang zu fokussieren, und dass eine Kopplungseinrichtung (30) vorgesehen ist, welche eingangsseitig mit den ersten und zweiten Strahlungsleitern (11, 21, 25) und austrittsseitig mit den Fokussiermitteln (40) verbunden ist und welche eingerichtet ist, die erste und die zweite Laserstrahlung (LS1, LS2) in den gemeinsamen Strahlengang der Fokussiermittel (40) einzukoppeln.

2. Fügevorrichtung (1) gemäß Anspruch 1, wobei mindestens ein weiterer zweiter Strahlungsleiter (21, 25) vorgesehen ist, welcher mit der zweiten Laserstrahlungsquelle (20) verbunden ist, um die zweite Laserstrahlung (LS2) in den mindestens einen weiteren zweiten Strahlungsleiter (21, 25) einzukoppeln.

3. Fügevorrichtung (1) gemäß Anspruch 1 oder 2, wobei die Kopplungseinrichtung (30) eine Mehrkernfaser mit einer der Summe von ersten und zweiten Strahlungsleitern (11, 21, 25) entsprechenden Anzahl von Faserkernen zur Strahlungsleitung aufweist, und wobei die Faserkerne einerseits jeweils mit einem von jeweiligen Strahlungsaustrittsenden der ersten und zweiten Strahlungsleiter (11, 21, 25) gekoppelt sind und andererseits jeweils mit den Fokussiermitteln (40) gekoppelt sind.

4. Fügevorrichtung (1) gemäß einem der Ansprüche 1-3, wobei sich die Leistungskonfiguration der ersten Laserstrahlungsquelle (10) von der Leistungskonfiguration der zweiten Laserstrahlungsquelle (20) unterscheidet.

5. Fügevorrichtung (1) gemäß einem der Ansprüche 1-4, wobei die Leistungskonfiguration der ersten Laserstrahlungsquelle (10) definiert ist, um mit der fokussierten ersten Laserstrahlung (LS1) einen Stoffschluss der beiden Bauteile (B1, B2) zu bewirken.

6. Fügevorrichtung (1) gemäß einem der Ansprüche 1-5, wobei die Leistungskonfiguration der zweiten Laserstrahlungsquelle (20) definiert ist, um mit der fokussierten zweiten Laserstrahlung (LS2) eine Oberflächenvorbehandlung an mindestens einem der beiden Bauteile (B1, B2) in der Fügezone (FZ) als eine Fügevorbehandlung zu bewirken.

7. Fügevorrichtung (1) gemäß einem der Ansprüche 1-6, wobei die Leistungskonfiguration der zweiten Laserstrahlungsquelle (20) definiert ist, um mit der fokussierten zweiten Laserstrahlung (LS2) ein Abtragen und/oder Anschmelzen einer Beschichtung auf mindestens einem der beiden Bauteile (B1, B2) in der Fügezone (FZ) als eine Fügevorbehandlung zu bewirken.

8. Fügeverfahren zum mittels Laserstrahlung Zusammenfügen mindestens zweier Bauteile (B1, B2), aufweisend:
Anordnen der beiden Bauteile (B1, B2), so dass sie eine Fügezone (FZ) zum Zusammenfügen dieser definieren,
Fokussieren einer von einer ersten Laserstrahlungsquelle (10) emittierten ersten Laserstrahlung (LS1) in einem Laserspot (LS1') in die Fügezone (FZ) der Bauteile (B1, B2), so dass im Bereich des Laserspots (LS1') der ersten Laserstrahlung (LS1) durch Wärmeeinbringung ein Stoffschluss der beiden Bauteile (B1, B2) erzielt wird, und
in einer Fügerichtung (FR) dem Laserspot (LS1') der ersten Laserstrahlung (LS1) vorlaufend Fokussieren einer von einer zweiten Laserstrahlungsquelle (20) emittierten zweiten Laserstrahlung (LS2) in mindestens einem Laserspot (LS2') in die Fügezone (FZ) der Bauteile (B1, B2), so dass im Bereich des mindestens einen Laserspots (LS2') der zweiten Laserstrahlung (LS2) eine Fügevorbehandlung an mindestens einem der beiden Bauteile (B1, B2) in der Fügezone (FZ) durchgeführt wird,
**dadurch gekennzeichnet, dass** die erste Laserstrahlung (LS1) und die zweite Laserstrahlung (LS2) über einen gemeinsamen Strahlengang in die Fügezone (FZ) fokussiert werden.

9. Fügeverfahren gemäß Anspruch 8, wobei durch den mindestens einen Laserspot (LS2') der zweiten Laserstrahlung (LS2) als Fügevorbehandlung eine Oberflächenvorbehandlung an dem mindestens einen der beiden Bauteile (B1, B2) in der Fügezone (FZ) durchgeführt wird.

10. Fügeverfahren gemäß Anspruch 9, wobei durch den mindestens einen Laserspot (LS2') der zweiten Laserstrahlung (LS2) als Oberflächenvorbehandlung ein Abtragen und/oder Anschmelzen einer Beschichtung auf mindestens einem der beiden Bauteile (B1, B2) in der Fügezone (FZ) durchgeführt wird.

## Claims

1. A joining device (1) for the laser beam-based joining of at least two components (B1, B2), having:
a first laser radiation source (10) comprising a predetermined power configuration, a first radiation guide (11), which is connected to the first laser radiation source (10), in order to couple first laser radiation (LS1) emitted by the first laser radiation source (10) into the first radiation guide (11),
a second laser radiation source (20) comprising a predetermined power configuration, at least one second radiation guide (21, 25), which is connected to the second laser radiation source (20), in order to couple second laser radiation (LS2) emitted by the second laser radiation source (20) into the at least one second radiation guide (21, 25), and
focusing means (40), which are coupled to the first and second radiation guides (11, 21, 25) and which are configured to focus the first laser radiation (LS1) and the second laser radiation (LS2) spaced apart from one another into a joining zone (FZ) of the two components (B1, B2),
**characterized in that** the focusing means (40) are configured to focus the first and the second laser radiation (LS1, LS2) via a common beam path, and that a coupling device (30) is provided, which is connected on the input side to the first and second radiation guides (11, 21, 25) and on the output side to the focusing means (40), and which is configured to couple the first and the second laser radiation (LS1, LS2) into the common beam path of the focusing means (40).

2. The joining device (1) according to claim 1, wherein at least one further second radiation guide (21, 25) is provided, which is connected to the second laser radiation source (20), in order to couple the second laser radiation (LS2) into the at least one further second radiation guide (21, 25).

3. The joining device (1) according to claim 1 or 2, wherein the coupling device (30) has a multi-core fiber comprising a number of fiber cores corresponding to the sum of first and second radiation guides (11, 21, 25) for guiding radiation, and wherein the fiber cores are in each case coupled on the one hand to one of respective radiation outlet ends of the first and second radiation guides (11, 21, 25) and on the other hand are in each case coupled to the focusing means (40).

4. The joining device (1) according to any one of claims 1-3, wherein the power configuration of the first laser radiation source (10) differs from the power configuration of the second laser radiation source (20).

5. The joining device (1) according to any one of claims 1-4, wherein the power configuration of the first laser radiation source (10) is defined to effect a material bonding of the two components (B1, B2) with the focused first laser radiation (LS1).

6. The joining device (1) according to any one of claims 1-5, wherein the power configuration of the second laser radiation source (20) is defined to effect, with the focused second laser radiation (LS2), a surface pretreatment at at least one of the two components (B1, B2) in the joining zone (FZ) as a joining pretreatment.

7. The joining device (1) according to any one of claims 1-6, wherein the power configuration of the second laser radiation source (20) is defined to effect, with the focused second laser radiation (LS2), an ablation and/or melting of a coating on at least one of the two components (B1, B2) in the joining zone (FZ) as a joining pretreatment.

8. A joining method for joining at least two components (B1, B2) by means of laser radiation, having:
arranging the two components (B1, B2), so that they define a joining zone (FZ) for joining them,
focusing a first laser radiation (LS1) emitted by a first laser radiation source (10) in a laser spot (LS1') into the joining zone (FZ) of the components (B1, B2), so that a material bonding of the two components (B1, B2) is attained in the area of the laser spot (LS1') of the first laser radiation (LS1) by heat input, and
focusing a second laser radiation (LS2) emitted by a second laser radiation source (20) in at least one laser spot (LS2') into the joining zone (FZ) of the components (B1, B2), so that a joining pretreatment at at least one of the two components (B1, B2) in the joining zone (FZ) is performed in the area of the at least one laser spot (LS2') of the second laser radiation (LS2),
**characterized in that** the first laser radiation (LS1) and the second laser radiation (LS2) are focused into the joining zone (FZ) via a common beam path.

9. The joining method according to claim 8, wherein a surface pretreatment at the at least one of the two components (B1, B2) in the joining zone is performed by means of the at least one laser spot (LS2') of the second laser radiation (LS2) as joining pretreatment.

10. The joining method according to claim 9, wherein an ablation and/or melting of a coating on at least one of the two components (B1, B2) in the joining zone (FZ) is performed by means of the at least one laser spot (LS2') of the second laser radiation (LS2) as surface pretreatment.

## Revendications

1. Dispositif d'assemblage (1) pour l'assemblage à base de rayon laser d'au moins deux composants (B1, B2), présentant :
une première source de rayonnement laser (10) avec une configuration de puissance prédéterminée,
un premier conducteur de rayonnement (11) qui est connecté à la première source de rayonnement laser (10) pour injecter un premier rayonnement laser (LS1) émis par la première source de rayonnement laser (10) dans le premier conducteur de rayonnement (11),
une seconde source de rayonnement laser (20) avec une configuration de puissance prédéterminée,
au moins un second conducteur de rayonnement (21, 25) qui est connecté à la seconde source de rayonnement laser (20) pour injecter un second rayonnement laser (LS2) émis par la seconde source de rayonnement laser (20) dans l'au moins un second conducteur de rayonnement (21, 25), et
des moyens de concentration (40) qui sont couplés aux premier et second conducteurs de rayonnement (11, 21, 25) et qui sont configurés pour concentrer le premier rayonnement laser (LS1) et le second rayonnement laser (LS2) de manière écartée l'un de l'autre dans une zone d'assemblage (FZ) des deux composants (B1, B2),
**caractérisé en ce que** les moyens de concentration (40) sont configurés pour concentrer le premier et le second rayonnement laser (LS1, LS2) par le biais d'une trajectoire de rayons commune, et qu'un dispositif de couplage (30) est prévu, lequel est connecté côté entrée aux premier et second conducteurs de rayonnement (11, 21, 25) et côté sortie aux moyens de concentration (40), et qui est configuré pour injecter le premier et le second rayonnement laser (LS1, LS2) dans la trajectoire de rayons commune des moyens de concentration (40).

2. Dispositif d'assemblage (1) selon la revendication 1, dans lequel au moins un autre second conducteur de rayonnement (21, 25) est prévu, lequel est connecté à la seconde source de rayonnement laser (20) pour injecter le second rayonnement laser (LS2) dans l'au moins un autre second conducteur de rayonnement (21, 25).

3. Dispositif d'assemblage (1) selon la revendication 1 ou 2, dans lequel le dispositif de couplage (30) présente une fibre à plusieurs noyaux avec un nombre de noyaux de fibre pour la conduction de rayonnement correspondant à la somme des premier et second conducteurs de rayonnement (11, 21, 25), et dans lequel les noyaux de fibre sont couplés d'un côté chacun à une d'extrémités de sortie de rayonnement respectives des premier et second conducteurs de rayonnement (11, 21, 25) et sont couplés de l'autre côté chacun aux moyens de concentration (40).

4. Dispositif d'assemblage (1) selon une des revendications 1 à 3, dans lequel la configuration de puissance de la première source de rayonnement laser (10) se différencie de la configuration de puissance de la seconde source de rayonnement laser (20).

5. Dispositif d'assemblage (1) selon une des revendications 1 à 4, dans lequel la configuration de puissance de la première source de rayonnement laser (10) est définie pour entraîner une liaison de matière des deux composants (B1, B2) avec le premier rayonnement laser concentré (LS1).

6. Dispositif d'assemblage (1) selon une des revendications 1 à 5, dans lequel la configuration de puissance de la seconde source de rayonnement laser (20) est définie pour entraîner un prétraitement superficiel sur au moins un des deux composants (B1, B2) dans la zone d'assemblage (FZ) en tant que prétraitement d'assemblage avec le second rayonnement laser concentré (LS2).

7. Dispositif d'assemblage (1) selon une des revendications 1 à 6, dans lequel la configuration de puissance de la seconde source de rayonnement laser (20) est définie pour entraîner un enlèvement et/ou une fonte d'un revêtement sur au moins un des deux composants (B1, B2) dans la zone d'assemblage (FZ) en tant que prétraitement d'assemblage avec le second rayonnement laser concentré (LS2).

8. Procédé d'assemblage pour l'assemblage au moyen de rayonnement laser d'au moins deux composants (B1, B2), présentant :
agencement des deux composants (B1, B2) de sorte qu'ils définissent une zone d'assemblage (FZ) pour l'assemblage de ceux-ci,
concentration d'un premier rayonnement laser (LS1) émis par une première source de rayonnement laser (10) dans un point laser (LS1') dans la zone d'assemblage (FZ) des composants (B1, B2) de sorte qu'une liaison de matière des deux composants (B1, B2) est obtenue par apport de chaleur dans la région du point laser (LS1') du premier rayonnement laser (LS1), et
concentration d'un second rayonnement laser (LS2) émis par une seconde source de rayonnement laser (20) dans au moins un point laser (LS2') dans la zone d'assemblage (FZ) des composants (B1, B2) de manière préliminaire au point laser (LS1') du premier rayonnement laser (LS1) dans un sens d'assemblage (FR) de sorte qu'un prétraitement d'assemblage sur au moins un des deux composants (B1, B2) dans la zone d'assemblage (FZ) est réalisé dans la région de l'au moins un point laser (LS2') du second rayonnement laser (LS2),
**caractérisé en ce que** le premier rayonnement laser (LS1) et le second rayonnement laser (LS2) sont concentrés par le biais d'une trajectoire de rayons commune dans la zone d'assemblage (FZ).

9. Procédé d'assemblage selon la revendication 8, dans lequel un prétraitement superficiel sur l'au moins un des deux composants (B1, B2) dans la zone d'assemblage (FZ) est réalisé en tant que prétraitement d'assemblage par l'au moins un point laser (LS2') du second rayonnement laser (LS2).

10. Procédé d'assemblage selon la revendication 9, dans lequel un enlèvement et/ou une fonte d'un revêtement sur au moins un des deux composants (B1, B2) dans la zone d'assemblage (FZ) est réalisé en tant que prétraitement superficiel par l'au moins un point laser (LS2') du second rayonnement laser (LS2).
